(19) Europäisches Patentamt
European Patent Office
Office européen des brevets

(11) **EP 3 373 705 B1**

(12) **EUROPÄISCHE PATENTSCHRIFT**

(45) Veröffentlichungstag und Bekanntmachung des Hinweises auf die Patenterteilung:
**19.10.2022 Patentblatt 2022/42**

(21) Anmeldenummer: **18160505.6**

(22) Anmeldetag: **07.03.2018**

(51) Internationale Patentklassifikation (IPC):
***H05B 45/395*** (2020.01)

(52) Gemeinsame Patentklassifikation (CPC):
**H05B 45/395; H05B 45/46; H05B 45/56;**
Y02B 20/30

(54) **VORRICHTUNG UND VERFAHREN ZUR ANSTEUERUNG EINER VIELZAHL VON LEUCHTDIODEN**

METHOD AND DEVICE FOR CONTROLLING A PLURALITY OF LEDS

DISPOSITIF ET PROCÉDÉ DE COMMANDE D'UNE PLURALITÉ DE DIODES ÉLECTROLUMINESCENTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2017 DE 102017203801**

(43) Veröffentlichungstag der Anmeldung:
**12.09.2018 Patentblatt 2018/37**

(73) Patentinhaber: **Karlsruher Institut für Technologie**
**76131 Karlsruhe (DE)**

(72) Erfinder:
• **Heidinger, Michael**
**76227 Karlsruhe (DE)**

• **Kling, Rainer**
**69221 Dossenheim (DE)**
• **Simon, Christoph**
**76131 Karlsruhe (DE)**

(74) Vertreter: **Altmann Stößel Dick Patentanwälte PartG mbB**
**Theodor-Heuss-Anlage 2**
**68165 Mannheim (DE)**

(56) Entgegenhaltungen:
WO-A1-2010/003448   CN-A- 101 702 849
DE-A1- 10 201 906   DE-A1-102015 205 808
DE-B3-102004 034 359   DE-B3-102015 104 973
DE-B4-102010 045 389   US-A1- 2003 025 120
US-A1- 2014 211 192   US-B2- 9 018 845

EP 3 373 705 B1

## Beschreibung

Gebiet der Erfindung

Die Erfindung betrifft eine Vorrichtung und Verfahren zur Ansteuerung einer Vielzahl von Leuchtdioden, wobei die Leuchtdioden auf mindestens zwei in Parallelschaltung verbundene Stränge verteilt sind, wobei die Leuchtdioden innerhalb jedes Strangs in Form einer Reihenschaltung angeordnet sind.

Stand der Technik

In Leuchtdioden, die auch als "lichtemittierende Dioden" oder kurz als "LEDs" (von engl. *light-emitting diodes*) bezeichnet werden, wird bei Anlegen eines Betriebsstroms ein Lichtstrom ausgehend von der Leuchtdiode erzeugt, der in erster Näherung proportional zu dem angelegten Betriebsstrom ist. Der Lichtstrom der Leuchtdiode unterscheidet sich von einer Strahlungsleistung der Leuchtdiode, indem ein sichtbarer Anteil der Strahlungsleistung mit der Hellempfindlichkeitskurve des menschlichen Auges gewichtet wird. Die dadurch an der Leuchtdiode anliegende Spannung weist in der Regel eine Streuung über verschiedene Leuchtdioden-Exemplare auf und nimmt mit zunehmender Temperatur ab. Zudem altern Leuchtdioden, insbesondere, wenn überhöhte Ströme auftreten. Weiterhin kann sich die Lichtfarbe bei unterschiedlichen Betriebsströmen der Leuchtdioden ändern. Ein direkter Betrieb der Leuchtdiode an einer separaten Spannungsquelle ist daher nachteilig, da sich die für den gewünschten Betriebsstrom erforderliche Spannung aufgrund der Exemplarstreuung der Leuchtdioden und der Temperaturabhängigkeit der Spannung nur unzureichend genau einstellen lässt. Eine Ansteuerung der Leuchtdiode über eine Konstantstromquelle ermöglicht es vielmehr, einen definierten Lichtstrom zu erzeugen.

Die Vielzahl von Leuchtdioden, die folglich bevorzugt mit einem konstanten Betriebsstrom angesteuert werden, ist üblicherweise in Reihenschaltung angeordnet, damit alle Leuchtdioden mit demselben Betriebsstrom versorgt werden. In der Praxis ergibt sich jedoch ein Limit von 40 Leuchtdioden, die sich in Serie anordnen lassen, ohne die Schutzkleinspannung von 120V Gleichspannung, die auch "Sicherheitskleinspannung" (engl. *safety extra low voltage,* kurz SELV) bezeichnet wird, zu überschreiten. Der Begriff der "Schutzkleinspannung" bezeichnet eine niedrige elektrische Spannung, welche aufgrund geringer Höhe derart Schutz gegen einen elektrischen Schlag bieten kann, dass etwaig auftretende elektrische Körperströme üblicherweise folgenlos bleiben.

Alternativ kann die Vielzahl der Leuchtdioden in Form einer Parallelschaltung von Strängen von Leuchtdioden in Reihenschaltung angeordnet sein, wodurch sich gleichzeitig eine größere Anzahl von Leuchtdioden betreiben lässt. Bei der Anordnung der Leuchtdioden in Form der Stränge als parallele Zweige ist es jedoch wünschenswert, die Ströme in den einzelnen Strängen möglichst genau gegeneinander anzugleichen, da eine gute Angleichung der Ströme eine homogene Lichtverteilung zwischen den Leuchtdioden in verschiedenen Strängen, insbesondere während eines Dimmens der Leuchtdioden, ermöglichen kann.

Aus dem Stand der Technik sind verschiedene Vorrichtungen und Verfahren zur Ansteuerung einer Vielzahl von Leuchtdioden bekannt.

Allgemein ist es bekannt, einen Vorwiderstand in jeden einzelnen Strang einzubringen. Eine derartige Ausgestaltung verursacht jedoch hohe elektrische Verluste und verfügt daher nur über eine geringe Effizienz. Weiterhin lassen sich bei Auftreten einer Spannungsabweichung zwar Überströme in einzelnen Strängen verringern, eine vollständige Angleichung der Ströme in den einzelnen Strängen kann damit jedoch nicht erreicht werden.

In S. Winder, Power Supplies for LED Driving, ISBN: 978-0-7506-8341-8, Seite 22, wird daher vorgeschlagen, eine Strombegrenzung mittels Transistoren zu erzielen. Eine derartige Anordnung kann die unterschiedlichen Ströme ebenfalls nicht ausgleichen, sondern begrenzt vielmehr individuell lediglich den Maximalstrom in jedem einzelnen Strang. Daher eignet sich diese Anordnung nicht für dimmbare Leuchtdioden. Aufgrund des Spannungsabfalls über den verwendeten Transistoren ergibt sich auch hier eine geringe Effizienz dieser Anordnung.

DE 10 2015 104 973 B3 offenbart eine weitere Anordnung und ein Verfahren zur Ansteuerung von mehreren in einer Reihenschaltung angeordneten Leuchtdioden. Hierbei ist zwischen dem ersten steuerbaren Halbleiterschalter und der Konstantstromquelle in Reihenschaltung zu einem ersten Strang aus Leuchtdioden eine erste Referenzspannungserzeugungseinheit und zwischen dem zweiten steuerbaren Halbleiterschalter und der Konstantstromquelle in Reihenschaltung zu einem zweiten Strang aus Leuchtdioden eine zweite Referenzspannungserzeugungseinheit angeordnet. Ein Ausgang der ersten Referenzspannungserzeugungseinheit ist mit einer ersten und einer zweiten Steuerschaltung und ein Ausgang der zweiten Referenzspannungserzeugungseinheit ist mit der zweiten und der ersten Steuerschaltung verbunden, wobei ein Ausgang der ersten Steuerschaltung mit einem Steuereingang des ersten steuerbaren Halbleiterschalters und ein Ausgang der zweiten Steuerschaltung mit einem Steuereingang des zweiten steuerbaren Halbleiterschalters verbunden ist

Weitere Anordnungen und Verfahren zur Ansteuerung einer Vielzahl von in Reihenschaltung angeordneten Leuchtdioden finden sich in US 2009/0187925 A1, US 2015/0061390 A1, WO 2010/003448 A1, US 2003/025120 A1 und DE 10 2004 034359 B3.

S. Winder, s.o., Seite 26, beschreibt weiterhin eine weitere Anordnung zur Ansteuerung einer Vielzahl von Leuchtdioden in Form von parallel zueinander angeordneten Strängen, wobei die Leuchtdioden innerhalb jedes Strangs in Reihe geschaltet sind. Zum Angleichen der Ströme wird ein sog. "Bias-Bus" verwendet. Hierbei sind die Transistoren als Stromspiegel angeordnet, welcher dazu eingerichtet ist, um Ströme anzugleichen. Ein Angleichen der Ströme kann jedoch nur unpräzise erfolgen, da die Transistoren einen Temperatur-Einfluss aufweisen. Dieser Effekt soll durch 51R Widerstände kompensiert werden. Da zum Betrieb dieser Anordnung jedoch ein hoher Spannungsabfall benötigt wird, weist diese Anordnung eine sehr geringe Effizienz auf.

US 2011/0080115 A1 offenbart eine weitere Anordnung und ein Verfahren zur Ansteuerung von mehreren in einer Reihenschaltung angeordneten Leuchtdioden. Hierbei wird pro Strang jeweils eine Konstantstromquelle als Stromregler eingesetzt, wobei die im Einzelnen erzeugten Ströme einer Mittelwertbildung unterzogen werden. Als Bias-Schaltung zur Ansteuerung von Operationsverstärkern in den einzelnen Konstantstromquellen dient ein Transistor. Nachteilig an dieser Anordnung ist, dass sie zu einem Schwingen aufgrund einer fehlenden Kompensation der Stromquellen unter einzelnen Strömen und daher auch des gemittelten Stroms führen kann. Darüber hinaus ist die äußere Regelschleife nicht gedämpft, wodurch die Stromwertvorgabe in eine Schwingung versetzt werden kann. Damit ist der durch die Mittelwertbildung eigentlich angestrebte Schutz der Leuchtdioden ist nicht gegeben.

US 2014/0211192 A1 offenbart eine Vorrichtung zur Ansteuerung einer Vielzahl von Leuchtdioden, wobei die Leuchtdioden zwei in Parallelschaltung verbundene Stränge verteilt sind, wobei jeder der Stränge mehrere in Reihenschaltung angeordnete Leuchtdioden aufweist, wobei jede der Leuchtdioden hierbei über einen Betriebsstrom ansteuerbar ist. Die Vorrichtung umfasst zwei Konstantstromquellen, wobei jede der Konstantstromquellen dazu eingerichtet ist, um jeweils einen Konstantstrom anhand eines Sollwerts für den Betriebsstrom für die Leuchtdioden zu erzeugen. Die Vorrichtung umfasst weiterhin eine Mittelungsschaltung zur Bildung des Sollwerts für den Betriebs-strom aus den von jeder der Konstantstromquellen bereitgestellten Konstantströmen, wobei die Mittelungsschaltung einen Tiefpassfilter aufweist.

DE 10 2010 045 389 B4 offenbart ebenfalls eine Vorrichtung mit mehreren Leuchtdioden, welche über mehrere, in Parallelschaltung verbundene Stränge verteilt sind und welche über Stromquellen betrieben werden. Hierzu wird auch eine Vorspanneinheit eingesetzt, welche dazu dient, einen Arbeitspunkt der Stromquellen festzulegen, und welche über einen Tiefpassfilter verfügt.

CN 101 702 849 A offenbart eine Vorrichtung zur Ansteuerung von Leuchtdioden mit den Merkmalen des Oberbegriffs des Anspruchs 1 und ein Verfahren zur Ansteuerung von Leuchtdioden mit den Merkmalen des Oberbegriffs des Anspruchs 8.

DE 10 2015 205 808 A1 offenbart eine Schaltungsanordnung zum Betreiben zumindest einer ersten und genau einer zweiten Kaskade von LEDs. Hierin wird vorgeschlagen, Zenerdioden zur Verbesserung der Temperaturabhängigkeit der Operationsverstärker einzusetzen.

DE 102 01 906 A1 offenbart eine Signalgeberleuchte mit Leuchtdioden, umfassend eine Zenerdiode und zwei Transistoren zum Einstellen von Strömen in den jeweiligen Strängen der Leuchtdioden.

Aufgabe der Erfindung

Ausgehend hiervon, besteht die Aufgabe der vorliegenden Erfindung darin, eine Vorrichtung und ein Verfahren zur Ansteuerung einer Vielzahl von Leuchtdioden bereitzustellen, welche die aufgeführten Nachteile und Einschränkungen des Standes der Technik zumindest teilweise überwinden.

Insbesondere sollen das Verfahren und die Vorrichtung eine weitgehende Angleichung der Betriebsströme durch die Vielzahl der Leuchtdioden mit möglichst hoher Effizienz und eine möglichst homogene Lichtverteilung zwischen den Leuchtdioden ermöglichen, insbesondere während eines Dimmens der Leuchtdioden, wobei die Angleichung der Betriebsströme vorzugsweise möglichst unabhängig von einer möglichen Temperaturänderung in den Leuchtdioden erfolgen soll.

Offenbarung der Erfindung

Diese Aufgabe wird durch eine Vorrichtung und ein Verfahren zur Ansteuerung einer Vielzahl von Leuchtdioden gemäß den Merkmalen der unabhängigen Ansprüche gelöst. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nichtausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne dass hierdurch die Möglichkeit eingeschränkt wird, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten unangetastet bleiben, die hierdurch eingeleiteten Merkmale mit anderen Merkmalen zu kombinieren, seien es optionale oder nicht-optionale Merkmale.

In einem ersten Aspekt betrifft die vorliegende Erfindung eine Vorrichtung zur Ansteuerung von Leuchtdioden, wobei die Leuchtdioden auf mindestens zwei in Parallelschaltung verbundene Stränge verteilt sind, wobei jeder der mindestens zwei Stränge eine der Leuchtdioden oder mindestens zwei in Reihenschaltung angeordnete Leuchtdioden der Leuchtdioden aufweist, wobei an die mindestens zwei in Parallelschaltung verbundenen Stränge ein Betriebsstrom angelegt ist, wobei sich der angelegte Betriebsstrom auf die mindestens zwei Stränge aufteilt. Die Vorrichtung umfasst hierbei

- mindestens zwei Konstantstromquellen, wobei jede der mindestens zwei Konstantstromquellen dazu ausgelegt ist, einen Konstantstrom für jeweils einen der mindestens zwei in Parallelschaltung verbundenen Stränge anhand eines Sollwerts zu erzeugen, wobei jede der mindestens zwei Konstantstromquellen mindestens einen ersten Tiefpassfilter aufweist;
- eine Mittelungsschaltung zur Bildung eines Mittelwertes aus den jeweiligen bereitgestellten Konstantströmen, wobei der von der Mittelungsschaltung gebildete Mittelwert der Sollwert ist, wobei die Mittelungsschaltung mindestens einen zweiten Tiefpassfilter aufweist; und
- eine Vorspanneinheit, die dazu ausgelegt ist, in jeder der mindestens zwei Konstantstromquellen unter Verwendung des von der Mittelungsschaltung gebildeten Mittelwerts einen Arbeitspunkt festzulegen;

wobei die Vorspanneinheit mindestens zwei Transistoren und eine Zenerdiode aufweist und derart eingerichtet ist, dass
ein erster Transistor der mindestens zwei Transistoren und die Zenerdiode eine Offset-Spannung erzeugen, wobei ein zweiter Transistor der mindestens zwei Transistoren die an der Zenerdiode anliegende Spannung spiegelt, wodurch die an der Zenerdiode anliegende Spannung in einen Ansteuerstrom zur Festlegung der jeweiligen Arbeitspunkte umgesetzt wird.

Die erfindungsgemäße Vorrichtung ist somit zu einer Ansteuerung einer Vielzahl von Leuchtdioden eingerichtet. Die Vorrichtung kann hierzu insbesondere in Form von diskreten oder integrierten Schaltkreisen oder einer Kombination hiervon ausgestaltet sein. Beispielsweise können Teile der Vorrichtung über einen oder mehrere anwendungsspezifische integrierte Schaltkreise (application-specified integrated circuits; ASICs) oder Universalschaltkreise, insbesondere FPGAs (field-programmable gate arrays) oder FPAAs (Field programmable analog arrays) verfügen. Weitere Arten der Ausgestaltung der Vorrichtung sind möglich.

Die Vielzahl der Leuchtdioden ist hierbei in Form einer Serien-Parallel-Konfiguration als Array angeordnet. Hierzu sind die Leuchtdioden auf mindestens zwei in Parallelschaltung verbundene Stränge verteilt, wobei jeder der Stränge über genau eine einzelne Leuchtdiode oder über mindestens zwei in Reihenschaltung angeordnete Leuchtdioden verfügt. Hierbei ist jede der Leuchtdioden über einen Betriebsstrom ansteuerbar. Der Begriff der "Reihenschaltung" oder "Serienschaltung" bezeichnet hierbei eine aufeinanderfolgende Anbringung von mindestens zwei Leuchtdioden innerhalb eines Stranges oder Zweiges einer Schaltung in einer Weise, dass hierdurch ein einziger Strompfad durch die mindestens zwei Leuchtdioden ausgebildet wird. Folglich werden zwei in Reihe geschaltete Leuchtdioden von einem Betriebsstrom derselben Höhe beaufschlagt. Im Unterschied hierzu bezeichnet der Begriff der "Parallelschaltung" eine Anordnung von mindestens zwei Leuchtdioden in gesonderten Strängen oder Zweigen, wobei sich ein angelegter Betriebsstrom auf die vorhandenen Stränge aufteilt. Gemäß der vorliegenden Erfindung ist die Ausgestaltung des Arrays, d.h. die Anzahl der Stränge und die sich in jedem Strang befindliche Zahl an Leuchtdioden, beliebig. Um jedoch die Sicherheitskleinspannung nicht zu überschreiten, sind maximal 120V Spannung zulässig. In der Praxis kann die Vielzahl der in Reihe geschalteten Leuchtdioden höchstens 40 Leuchtdioden betragen, ohne die Norm der Sicherheitskleinspannung zu verletzen. Die Anzahl aller Leuchtdioden auf einer Platine kann jedoch beliebig sein.

Wie eingangs erwähnt, bezeichnet der Begriff der "Leuchtdiode", der "lichtemittierenden Diode" oder kurz "LED" (von engl. *light-emitting diodes*) ein elektronischen HalbleiterBauelement, dessen elektrische Eigenschaften im Wesentlichen denen einer Diode entsprechen, welches darüber hinaus jedoch dazu eingerichtet ist, bei Beaufschlagung mit einem Betriebsstrom elektromagnetische Strahlung insbesondere im sichtbaren Spektralbereich, die auch als "Licht" bezeichnet wird, und teilweise auch in den hieran angrenzenden Spektralbereichen des Ultravioletten (UV) bzw. des Infraroten (IR) zu emittieren. Eine Verteilung der emittierten Strahlung über einen Wellenlängenbereich hängt hierbei insbesondere von einem strukturellen Aufbau der Leuchtdioden und hierfür eingesetzten Materialien ab. Für die vorliegende Erfindung eignen sich insbesondere so genannte "Mid-power LEDs", welche im Gegensatz zu "high-power LEDs" weitgehend blendungsfrei ausgestaltet sein können. Mid-power LEDs erzeugen hierbei typischerweise eine Strahlungsleitung von 0.1 W bis 1 W; LEDs mit höheren Strahlungsleistungen werden üblicherweise als "high-power LEDS" bezeichnet.

Der Begriff der "Ansteuerung" der Leuchtdioden bezeichnet somit ein Anlegen eines Betriebsstroms festgelegter Höhe mittels der Vorrichtung an jeder der Leuchtdioden in dem Array, wodurch somit eine Spannung über jeder der Leuchtdioden erzeugt wird, welche hieraus jeweils einen Lichtstrom emittiert, der in erster Näherung proportional zu dem angelegten Betriebsstrom ist. Wie eingangs erwähnt, unterscheidet sich der Lichtstrom der Leuchtdiode von einer Strahlungsleistung der Leuchtdiode, indem ein sichtbarer Anteil der Strahlungsleistung mit der Hellempfindlichkeitskurve des menschlichen Auges gewichtet wird.

Die vorgeschlagene Vorrichtung umfasst hierbei mindestens zwei Konstantstromquellen, eine Vorspanneinheit und eine Mittelungsschaltung, welche erfindungsgemäß in einer Weise zusammenwirken, dass der Betriebsstrom in jeweils gewünschter Höhe an jeder der Leuchtdioden in dem Array anliegen kann. Die mindestens zwei Konstantstromquellen, die Vorspanneinheit und die Mittelungsschaltung sorgen gemeinsam insbesondere dafür, dass, ohne externe, übergeordnete Vorgabe eines Sollwerts für den Betriebsstrom für jede der Leuchtdioden dennoch eine weitgehende Angleichung der Betriebsströme durch jede der Leuchtdioden mit möglichst hoher Effizienz erfolgen kann, wodurch sich eine weitgehende homogene Lichtverteilung, insbesondere während eines Dimmens der Leuchtdioden, erzielen lässt. Der Begriff des "Dimmens" bezeichnet hierbei eine insbesondere absichtlich herbeigeführte möglichst gleichmäßige Veränderung des Lichtstroms in der Vielzahl der Leuchtdioden, insbesondere eine Verringerung des Lichtstroms.

Jede Konstantstromquelle der Vorrichtung ist dazu eingerichtet, um jeweils einen Konstantstrom für jede der Leuchtdioden innerhalb der Stränge von in Reihe geschalteten Leuchtdioden zu erzeugen. Hierbei kann es besonders vorteilhaft sein, wenn für jeden der Stränge eine gesonderte Konstantstromquelle vorgesehen ist; jedoch können in einer weniger bevorzugten Ausgestaltung der Erfindung mindestens zwei Stränge auch über eine gemeinsame Konstantstromquelle verfügen. Der Begriff der "Konstantstromquelle" bezeichnet hierbei eine Einrichtung zur Erzeugung eines elektrischen Stroms, wobei der von der Konstantstromquelle erzeugte elektrische Strom unabhängig von ihren internen Aufbau und der angeschlossen Last einen konstanten Wert aufweist und damit auch als "Konstantstrom" bezeichnet werden kann. Grundsätzlich lässt sich für die vorliegende Erfindung jede bekannte Art der Konstantstromquelle einsetzen, insbesondere spannungsgesteuerte MOSFET Transistoren (Metalloxidschicht-Feldeffekt-Transistoren; MOSFETs von engl. *metal oxide semiconductor field effect transistors*), JFET-Transistoren (Übergangszonen-Feldeffekt-Transistoren; JFETs von engl. *junction field effect transistors*) Operationsverstärker, stromgesteuerte Bipolartransistoren, integrierte Schaltkreise oder einer Kombination hiervon. Unabhängig von der gewählten Art der Ausführung der Konstantstromquelle, verfügt jede der Konstantstromquellen vorzugsweise über denselben inneren Aufbau, um auf diese Weise eine möglichst weitgehende Parallelisierung der Ansteuerung der Stränge der Leuchtdioden erzielen zu können.

In einer bevorzugten Ausgestaltung der vorliegenden Erfindung weist jede der Konstantstromquellen mindestens einen Transistor und mindestens einen Operationsverstärker auf, wobei der Operationsverstärker dazu eingerichtet ist, den Transistor anzusteuern. Hierbei ist der Transistor vorzugsweise als MOSFET Transistor ausgestaltet, welcher über ein so genanntes "Gate" als Steuerelektrode verfügt, deren Ansteuerung von dem zugehörigen Operationsverstärker ausgeführt wird.

Weiterhin weist die erfindungsgemäße Vorrichtung eine Mittelungsschaltung auf, welche zur Bildung eines Mittelwertes aus denjenigen Konstantströmen, die jede der Konstantstromquellen bereitstellt, eingerichtet ist. Der Begriff der "Mittelungsschaltung" bezeichnet hierbei eine elektronische Schaltung, die dazu eingerichtet ist, um die von den einzelnen Konstantstromquellen erzeugten Ströme zu mitteln, vorzugsweise zu filtern, und den Mittelwert als Sollwert für den Betriebsstrom der Leuchtdioden mit derselben Höhe bereitzustellen. Der Begriff des "Mittelwertes" bezieht sich hierbei auf einen Stromwert, der aus den jeweiligen Stromwerten für die einzelnen Konstantströme, die von jeder der Konstantstromquellen bereitgestellt werden, gebildet wird. Hierbei kann der Mittelwert vorzugsweise ein arithmetisches Mittel aus den einzelnen Stromwerten bezeichnen; andere Arten einer Mittelwertbildung, insbesondere ein geometrisches oder ein quadratisches Mittel, sind jedoch ebenfalls denkbar. In einer bevorzugten Ausgestaltung kann die Mittelungsschaltung hierzu aus einzelnen Abtastspannungen, die jeweils mit dem von einer einzelnen Konstantstromquelle erzeugten Konstantstrom über einen jeweils zugehörigen Abtastwiderstand in Beziehung stehen, eine gemittelte Spannung erzeugen, welche dann als Ansteuerspannung für jede der Konstantstromquellen zur Verfügung stehen kann.

Weiterhin umfasst die erfindungsgemäße Vorrichtung eine Vorspanneinheit, die auch als "Vorspannungseinheit" bezeichnet werden kann. Die Vorspanneinheit dient in erster Linie dazu, um jeweils die mindestens zwei Konstantstromquellen anzusteuern. Die Vorspanneinheit kann hierzu mindestens einen Vorwiderstand (Bias-Widerstand) aufweisen, welcher eine an der Vorspanneinheit anliegende Spannung in den gewünschten Ansteuerstrom umwandeln kann. Aus dem Stand der Technik ist es bekannt, hierzu eine externe Spannung an die Vorspanneinheit anzulegen, was jedoch mit Nachteilen verbunden ist. Hierzu wird insbesondere eine externe Steuereinrichtung als höhere Instanz benötigt, um den entsprechenden Wert festzulegen. Zudem ist eine zusätzliche Verbindung erforderlich, um den festgelegten Wert an die Vorspanneinheit zu übermitteln. Diese Nachteile können durch eine vorzugsweise Ansteuerung der Vorspanneinheit überwunden werden, die erfindungsgemäß den durch die Mittelungsschaltung ohnehin bereitgestellten Mittelwert aus den von jeder Konstantstromquelle erzeugten Konstantströmen nutzen kann. Auf diese Weise kann auf eine externe Steuereinrichtung als höhere Instanz verzichtet werden und eine zusätzliche Verbindung kann entfallen.

In der erfindungsgemäßen Ausgestaltung der Konstantstromquelle, die einen MOSFET Transistor und einen Operationsverstärker aufweist, verfügt jeder der Operationsverstärker über zwei stabile Arbeitspunkte, und zwar trotz einer angelegten Spannung, bei 0 A, und andererseits bei einem zwischen den die Leuchtdioden umfassenden Strängen gleichmäßig verteilten Strom. Eine wesentliche Aufgabe der Vorspanneinheit besteht daher darin, einen geringfügig höheren Strom als den gleichmäßig verteilten gemittelten Strom zu erzeugen. In einer bevorzugten Ausgestaltung kann diese Aufgabe dadurch gelöst werden, dass die Vorspanneinheit einen Startstrom bereitstellt, die von einer in der Vorspanneinheit vorhandenen zusätzlichen Konstantstromquelle bereitgestellt werden kann. Um den gewünschten Startstrom zu erzeugen, kann die Vorspanneinheit in einer ersten Ausgestaltung mindestens zwei Transistoren, insbesondere zwei PNP Transistoren, aufweisen, die entsprechend dimensioniert werden können. Eine Ausgestaltung, die NPN oder MOSFET Transistoren umfasst, ist ebenfalls denkbar. Hierbei kann der in der Vorspanneinheit vorhandene Vorwiderstand (Bias-Widerstand Rb) darüber hinaus dazu eingesetzt werden, um einen Mindeststrom für die Vorspanneinheit bereitzustellen.

In einer besonders bevorzugten Ausgestaltung kann darüber hinaus die Angleichung der Betriebsströme weitgehend unabhängig von einer möglichen Temperaturänderung in den Leuchtdioden erfolgen soll. Eine derartige Eigenschaft kann insbesondere deshalb vorteilhaft sein, da Leuchtdioden Verlustwärme erzeugen. Dieser Effekt kann sich darüber hinaus wesentlich verstärken, wenn sie, wie bei der vorliegenden Erfindung, in größerer Anzahl in Form eines Arrays mit hoher Packungsdichte angeordnet sind. Daher wäre es besonders wünschenswert, wenn die Vorspanneinheit eine möglichst geringe Temperaturempfindlichkeit und damit eine möglichst hohe Temperaturstabilität aufweisen könnte. Erfindungsgemäß weist die Vorspanneinheit daher zusätzlich zu den mindestens zwei Transistoren eine Zenerdiode auf. Hierbei kann es besonders vorteilhaft sein, wenn die mindestens zwei Transistoren aus einem gemeinsam Herstellungsprozess stammen, so dass sie einen weitgehend identischen Temperaturkoeffizienten aufweisen können, wodurch sich unter Verwendung der Zenerdiode, die besonders bevorzugt temperaturunabhängig ausgeführt sein kann, eine eventuell auftretende Änderung der Temperatur kompensieren lässt.

Um die Ansteuerung der Vielzahl der Leuchtdioden mit einem konstanten Betriebsstrom möglichst derselben Höhe zu ermöglichen, ist es wünschenswert, ein Schwingungen des von der Vorrichtung bereitgestellten Betriebsstroms zu vermeiden. Hierzu verfügt einerseits jede der Konstantstromquellen über einen ersten Tiefpassfilter und andererseits die Mittelungsschaltung über einen zweiten Tiefpassfilter. Der Begriff des "Tiefpassfilters" bezeichnet einen hierbei elektronischen Filter, der Anteile an elektrischen Signalen, d.h. insbesondere an einer Spannung oder einem Strom, welche Frequenzen unterhalb eine Grenzfrequenz aufweisen, im Wesentlichen ungeschwächt passieren lässt, während Anteile oberhalb der Grenzfrequenz dagegen ein Dämpfung, d.h. eine Verringerung der Signalamplitude, erfahren. Der Begriff der "Grenzfrequenz" bezeichnet hierbei eine Frequenz in einem Frequenzspektrum eines von einem elektronischen Bauelement bereitgestellten Stroms, bei welcher eine Amplitude des am Ausgang des Bauteils bereitgestellten Stroms unter einen vorgegebenen Wert sinkt, beispielsweise auf einen Wert von $1/\sqrt{2} \approx 0{,}707$ oder von $1/e \approx 0{,}368$. Andere Werte sind jedoch denkbar.

Der erste Tiefpassfilter kann hierbei als einen Tiefpassfilter i-ter Ordnung und der zweite Tiefpassfilter als einen Tiefpassfilter *j*-ter Ordnung ausgeführt sein, wobei *i, j* ganzzahlige Werte > 0, d.h. 1, 2, 3 usw. angeben können. Vorzugsweise können somit der erste Tiefpassfilter als Tiefpassfilter 2. Ordnung und der zweite Tiefpassfilter als Tiefpassfilter 1. Ordnung ausgeführt sein. In einer bevorzugten Ausgestaltung, kann der Tiefpassfilter 1. Ordnung eine Kombination eines Widerstands und eines Kondensators umfassen. Der Tiefpassfilter 2. Ordnung kann hierbei insbesondere auch durch eine Reihenschaltung von zwei Tiefpassfiltern 1. Ordnung erhalten werden. Andere Ausführungen sind jedoch möglich; insbesondere ein Tiefpassfilter höherer Ordnung, der durch Kombination von mindestens zwei Tiefpassfiltern niedrigerer Ordnung erhalten werden kann.

Während der erste Tiefpassfilter dazu eingerichtet ist, um Frequenzen des von der zugehörigen Konstantstromquelle oberhalb einer vorzugsweise einstellbaren ersten Grenzfrequenz zu verringern, dient der zweite Tiefpassfilter dazu, um einen Anteil des von der Mittelungsschaltung erzeugten Mittelwerts aus den einzelnen Konstantströmen oberhalb einer vorzugsweise ebenfalls einstellbaren zweiten Grenzfrequenz zu verringern. In der oben beschriebenen bevorzugten Ausgestaltung der Konstantstromquelle, die über einen MOSFET Transistor und einen Operationsverstärker verfügt, kann der erste Tiefpassfilter insbesondere dazu dienen, um jeweils eine Verstärkung (engl. *Gain*) des MOSFET Transistors und des Operationsverstärkers in jeder der Konstantstromquellen oberhalb der ersten Grenzfrequenz zu verringern. In einer besonders vorteilhaften Ausgestaltung kann die zweite Grenzfrequenz der Mittelungsschaltung derart eingestellt sein, dass sie einen Wert unterhalb der ersten Grenzfrequenz in jeder der Konstantstromquellen annimmt. Bevorzugt unterschreitet hierbei die zweite Grenzfrequenz die ersten Grenzfrequenz um mindestens einen Faktor 5, besonders bevorzugt um mindestens einen Faktor 10, um auf diese Weise ein Schwingen des Betriebsstroms möglichst weitgehend zu verhindern.

In einem weiteren Aspekt betrifft die vorliegende Erfindung ein Verfahren zur Ansteuerung von Leuchtdioden gemäß der hierin beschriebenen Vorrichtung,. Hierbei erzeugen mindestens zwei Konstantstromquellen jeweils einen Konstantstrom für die in einem der Stränge angeordneten Leuchtdioden, wobei jede Konstantstromquelle bevorzugt einen Operationsverstärker aufweist, wobei ein von einer Vorspanneinheit der Vorrichtung unter Verwendung des von der Mittelungsschaltung gebildeten Mittelwerts einen Ansteuerstrom bereitstellt, mittels dem ein jeweiliger Arbeitspunkt in jeder der mindestens zwei Konstantstromquellen festlegt wird. Erfindungsgemäß weist die Vorspanneinheit mindestens zwei Transistoren und eine Zenerdiode auf. wobei mittels des ersten Transistors der mindestens zwei Transistoren und der Zenerdiode eine Offset-Spannung erzeugt wird, wobei mittels des zweiten Transistors der mindestens zwei Transistoren die an der Zenerdiode anliegende Spannung gespiegelt wird, wodurch die an der Zenerdiode anliegende Spannung in den Ansteuerstrom zur Festlegung der jeweiligen Arbeitspunkte umgesetzt wird. In einer besonders bevorzugten Ausgestaltung weist die Vorspanneinheit mindestens einen Vorwiderstand, die mindestens zwei Transistoren und die eine Zenerdiode auf, welche als zusätzliche Konstantstromquelle den Ansteuerstrom festlegen.

Weiterhin führt hierbei eine Mittelungsschaltung jeder Leuchtdiode jedem Strang einen gemittelten Betriebsstrom zu, den die Mittelungsschaltung aus den von den

Konstantstromquellen erzeugten Konstantströmen bildet. In einer besonders bevorzugten Ausgestaltung wird die Vorspanneinheit von dem von der Mittelungsschaltung bereitgestellten gemittelten Betriebsstrom angesteuert. Insbesondere um ein oben beschriebenes Schwingungen des gemittelten Betriebsstroms zu verringern, werden in jeder Konstantstromquelle ein erster Tiefpassfilter und in der Mittelungsschaltung ein zweiter Tiefpassfilter eingesetzt.

Für weitere Einzelheiten in Bezug auf das vorliegende Verfahren wird auf die Beschreibung der erfindungsgemäßen Vorrichtung verwiesen.

Vorteile der Erfindung

Das vorliegende Verfahren und die beschriebene Vorrichtung eignen sich insbesondere zur weitgehenden Angleichung der Betriebsströme von einer Vielzahl an Leuchtdioden, insbesondere von Mid-power LEDs. In besonders vorteilhafter Weise ist hierzu keine Sollwertvorgabe für die jeweiligen Betriebsströme erforderlich, da sich die vorgestellten Schaltungen ihre Stromvorgabe selbsttätig ermitteln, wodurch im Vergleich zu vielen aus dem Stand der Technik bekannten Vorrichtungen zur Ansteuerung von Leuchtdioden nicht nur eine Strombegrenzung, sondern eine tatsächliche Stromangleichung zwischen den verschiedenen Strängen erfolgt. Eine besondere Güte der Stromangleichung kann hierbei durch die in den Konstantstromquellen eingesetzten Operationsverstärker erreicht werden.

Die vorgeschlagene Vorrichtung weist im Vergleich zu aus dem Stand der Technik bekannten Vorrichtungen zur Ansteuerung von Leuchtdioden einen wesentlich geringen Energiebedarf auf, da ein niedrigerer Spannungsabfall zur Ansteuerung benötigt wird, und verfügt daher über eine besonders hohe Effizienz. Darüber hinaus kann die Effizienz durch die Verwendung von Mid-Power-LEDs statt High-Power-LEDs weiter gesteigert werden. Wie erste Versuche mit erfindungsgemäßen Prototypen ergaben, kann durch Einsatz der vorliegenden Vorrichtung insgesamt eine Energieeinsparung von mindestens 20 % erzielt werden.

In einer besonders bevorzugten Ausgestaltung der vorliegenden Erfindung kann hierbei die Angleichung der Betriebsströme weitgehend unabhängig von einer möglichen Temperaturänderung der Leuchtdioden während ihres Betriebs erfolgen. Auf diese Weise kann eine in Wesentlichen homogene Lichtverteilung zwischen den verschiedenen Leuchtdioden, insbesondere auch während eines Dimmens der Leuchtdioden, erzielt werden.

Kurze Beschreibung der Figuren

Weitere Einzelheiten und Merkmale der vorliegenden Erfindung ergeben sich aus der nachfolgenden Beschreibung von bevorzugten Ausführungsbeispielen, insbesondere in Verbindung mit den abhängigen Ansprüchen. Die Erfindung ist jedoch nicht auf die Ausführungsbeispiele beschränkt. Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente.

Im Einzelnen zeigen:

Figur 1 ein Blockschaltbild einer erfindungsgemäßen Vorrichtung zur Ansteuerung einer Vielzahl von Leuchtdioden in parallel verbundenen Strängen, wobei die Leuchtdioden innerhalb jedes Strangs in Reihenschaltung angeordnet sind, umfassend mindestens zwei Konstantstromquellen, eine Mittelungsschaltung und eine Vorspanneinheit;

Figur 2    ein Schaltbild eines bevorzugten Ausführungsbeispiels für die Konstantstromquelle;

Figur 3    ein Schaltbild eines bevorzugten Ausführungsbeispiels für die Mittelungsschaltung;

Figur 4    ein Schaltbild eines bevorzugten Ausführungsbeispiels für die erfindungsgemäße Vorrichtung zur Ansteuerung einer Vielzahl von Leuchtdioden;

Figur 5    ein Schaltbild eines weiteren, nicht von der vorliegenden Erfindung umfassten Ausführungsbeispiels für die Vorspanneinheit;

Figur 6    ein Schaltbild eines erfindungsgemäßen Ausführungsbeispiels für die Vorspanneinheit;

Figur 7    experimentell ermittelte Daten für eine Stromverteilung in einer erfindungsgemäß angesteuerten Vielzahl von Leuchtdioden; und

Figur 8    experimentell ermittelte Daten zum Verlauf des Stroms der Vorsteuereinheit über der Temperatur.

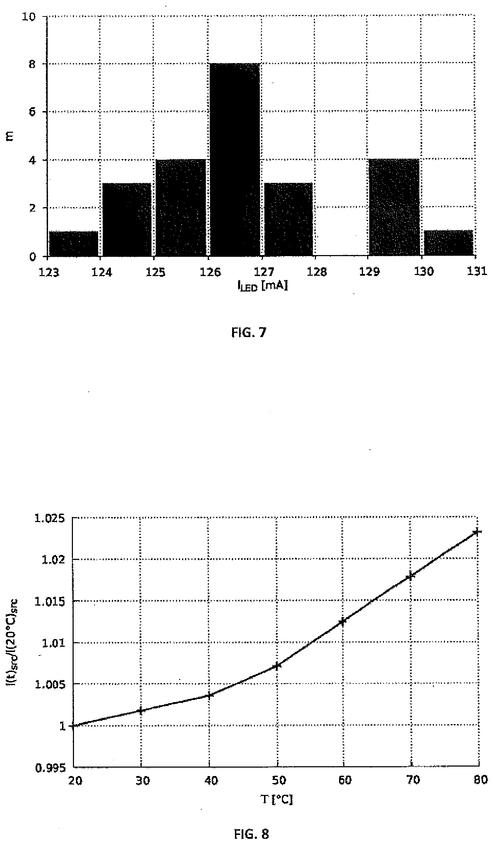

Figur 8    experimentell ermittelte Daten zum Verlauf des Stroms der Vorsteuereinheit über der Temperatur.

Beschreibung der Ausführungsbeispiele

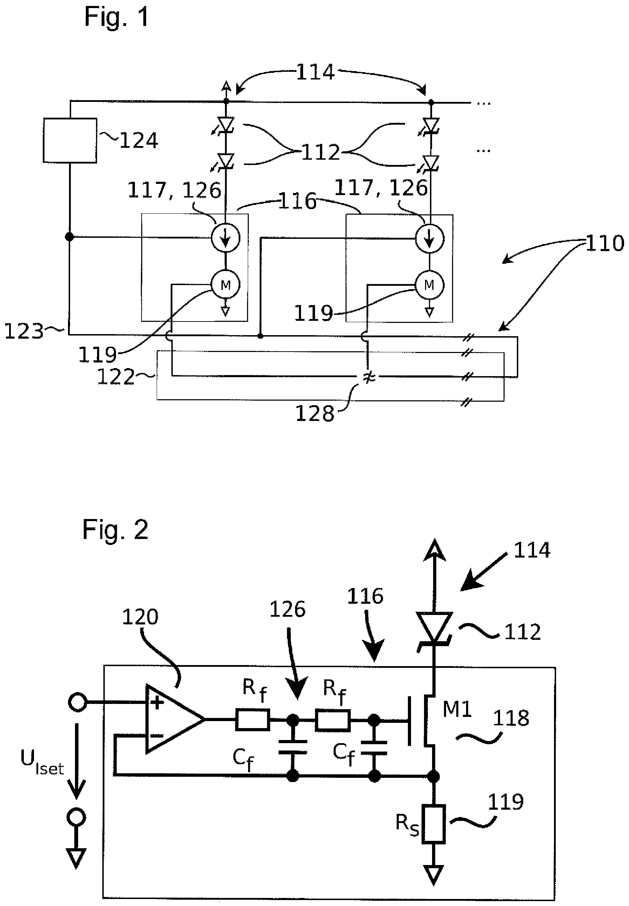

Figur 1 zeigt ein Blockschaltbild einer erfindungsgemäßen Vorrichtung 110 zur Ansteuerung einer Vielzahl von Leuchtdioden 112 mit einem möglichst konstanten Betriebsstrom derselben Höhe, wobei die Vielzahl der Leuchtdioden 112 hierbei in Form einer Serien-Parallel-Konfiguration als Array angeordnet ist. Hierzu sind die Leuchtdioden 112 auf mindestens zwei in Parallelschaltung verbundene Stränge 114 verteilt, wobei die Leuchtdioden innerhalb jedes Strangs 114 in Reihenschaltung angeordnet sind. In Figur 1 weist die Serien-Parallel-Konfiguration beispielhaft zwei gesonderte Stränge 114 auf, die jeweils über zwei Leuchtdioden 112 verfügen. Andere Ausführungen des Arrays sind jedoch denkbar. In der Praxis kann die Vorrichtung 110 insbesondere zur Ansteuerung von bis zu 40 LEDs unter Einhaltung der Schutzkleinspannungsrichtlinie in Serie und einer endlichen Anzahl an parallelen LED Strängen genutzt werden. In der Praxis wurden bisher bis zu 24 parallele LED Stränge eingesetzt; eine höhere Anzahl ist jedoch grundsätzlich möglich.

Weiterhin umfasst die Vorrichtung 110 zur Ansteuerung der Leuchtdioden 112 ferner für jeden Strang 114 eine mit dem Bezugszeichen 116 versehene Konstantstromquelle mit Strommessschaltung, die jeweils eine gesonderte Konstantstromquelle 117 und einen eigenen Strommesswiderstand 119 aufweist. Jede der Konstantstromquellen 117 ist dazu eingerichtet, um jeweils einen Konstantstrom möglichst derselben Höhe zur Ansteuerung der in Reihenschaltung angeordneten Leuchtdioden 112 eines jeden Strangs 114 bereitzustellen. Eine besonders bevorzugte Ausführungsform der Konstantstromquelle 117, die über einen Transistor 118 und einen Operationsverstärker 120 verfügt, findet sich in Figur 2. Unabhängig von der gewählten Art der Ausführung der Konstantstromquelle 117 verfügt jede der Konstantstromquellen 117 vorzugsweise über denselben inneren Aufbau, um eine möglichst weitgehende Parallelisierung der Ansteuerung der Stränge 114 der Leuchtdioden 112 erzielen zu können.

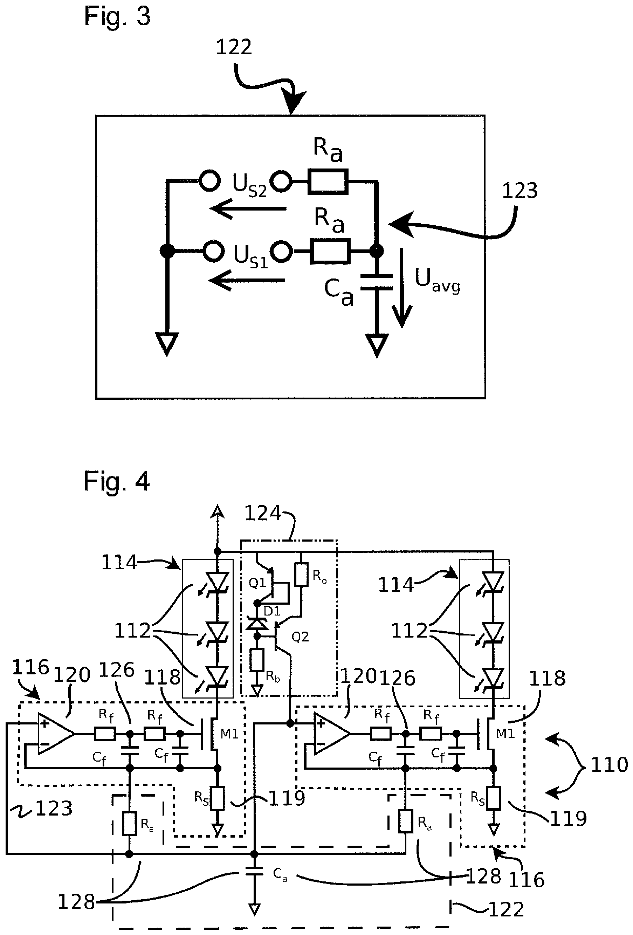

Weiterhin weist die Vorrichtung 110 zur Ansteuerung der Leuchtdioden 112 eine Mittelungsschaltung 122 auf, welche zur Bildung eines Mittelwertes aus den Konstantströmen, die jede der Konstantstromquellen 117 bereitstellt, eingerichtet ist. Hierzu werden die von den einzelnen Konstantstromquellen 117 erzeugten Ströme gemittelt, gefiltert und den Leuchtdioden 112 in den einzelnen Strängen 114 als Betriebsstrom mit möglichst derselben Höhe bereitgestellt. Eine besonders bevorzugte Ausführungsform der Mittelungsschaltung 122 findet sich in Figur 3.

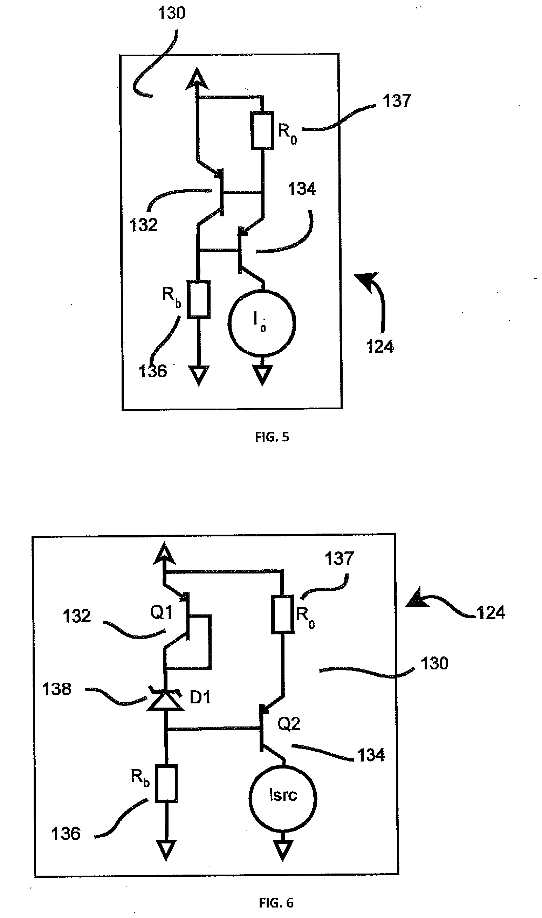

Ein zur Ansteuerung der Konstantstromquelle 117 erforderlicher Ansteuerstrom, welcher insbesondere zur Festlegung eines Arbeitspunktes der Konstantstromquelle 117 einsetzbar ist, wird für jede der Konstantstromquellen 117 durch eine gemeinsame Vorspanneinheit 124 bereitgestellt. Die Vorspanneinheit 124 kann hierzu mindestens einen Vorwiderstand (Bias-Widerstand) $R_b$ aufweisen, welcher eine an der Vorspanneinheit 124 anliegende Spannung in den, insbesondere zur Ansteuerung der Operationsverstärker 120 in den einzelnen Konstantstromquellen 117, gewünschten Ansteuerstrom umwandeln kann. Wie oben bereits dargelegt, können Nachteile bekannter Ansteuerungseinrichtungen durch eine Ansteuerung der Vorspanneinheit 124 überwunden werden, die erfindungsgemäß den durch die Mittelungsschaltung 122 ohnehin bereitgestellten Mittelwert aus den von jeder Konstantstromquelle 117 erzeugten Konstantströmen nutzt. Bevorzugte Ausführungsformen für die Vorspanneinheit 124 finden sich in den Figuren 5 und 6.

Um die Ansteuerung der Vielzahl der Leuchtdioden 112 mit einem konstanten Betriebsstrom möglichst derselben Höhe zu ermöglichen, ist es besonders erforderlich, ein Schwingen des von der Vorrichtung 110 bereitgestellten Betriebsstroms zu vermeiden. Hierzu verfügt einerseits jede der Konstantstromquellen 117 über einen ersten Tiefpassfilter 126 und andererseits die Mittelungsschaltung 122 über einen zweiten Tiefpassfilter 128. Während der erste Tiefpassfilter 126 dazu eingerichtet ist, um jeweils eine Verstärkung (Gain) des MOSFET Transistors 118 und des Operationsverstärkers 120 in jeder der Konstantstromquellen 117 oberhalb einer vorzugsweise einstellbaren ersten Grenzfrequenz $f_B$ zu verringern, dient der zweite Tiefpassfilter 128 dazu, um einen Anteil von der Mittelungsschaltung 122 erzeugten Mittelwerts aus den einzelnen, von jeder Konstantstromquelle 117 bereitgestellten Konstantströmen oberhalb einer vorzugsweise ebenfalls einstellbaren zweiten Grenzfrequenz $f_f$ zu verringern. Hierbei ist es besonders vorteilhaft, wenn die zweite Grenzfrequenz $f_f$ der Mittelungsschaltung 122 derart eingestellt ist, dass sie einen Wert unterhalb der ersten Grenzfrequenz $f_B$ in jeder der Konstantstromquellen 117 annimmt, bevorzugt einen um mindestens einen Faktor 5, besonders bevorzugt um mindestens einen Faktor 10, geringeren Wert, um auf diese Weise ein Schwingen des von der Vorrichtung 110 bereitgestellten Betriebsstroms zu verhindern.

Figur 2 zeigt ein Schaltbild eines bevorzugten Ausführungsbeispiels für die Konstantstromquelle 116 mit Strommessschaltung, die, wie hier schematisch dargestellt, den Betriebsstrom $I_{LED}$ für die einzige Leuchtdiode 112 in dem einzelnen Strang 114 bereitstellt. Die gemäß der vorliegenden Erfindung ansonsten durch die Mittelungsschaltung 122 durchgeführte Mittelung der von den Konstantstromquellen 117 erzeugten Konstantströme bleibt in der Darstellung gemäß Figur 2 außer Betracht. Die Aufgabe der Konstantstromquelle 117, einen Konstantstrom für die einzelne Leuchtdiode 112 bereitzustellen, wird in dieser bevorzugten Ausführung durch ein Zusammenwirken des MOSFET Transistors 118, der durch Anlegen einer Spannung steuerbar ist, und des Operationsverstärkers 120 ermöglicht. Als mögliche Alternativen bieten sich ein ebenfalls spannungsgesteuerter JFET-Transistor oder ein stromgesteuerter Bipolartransistor an. Weitere Ausführungen der Konstantstromquellen 117 sind denkbar, beispielsweise unter Verwendung eines integrierten Schaltkreises. Der Operationsverstärker 120 ist hierbei dazu eingerichtet, um einerseits eine Gate-Spannung an dem MOSFET Transistor 118 einzustellen und um andererseits eine Spannung $U_{RS}$ an einem Messwiderstand $R_S$ 119 anzulegen, wobei die Spannung $U_{RS}$ der den Ansteuerstrom $I_{set}$ erzeugenden Ansteuerspannung $U_{Iset}$ entspricht, wobei sich die Ansteuerspannung $U_{Iset}$ wie folgt ergibt:

$$U_{Iset} = R_S \cdot I_{LED} \qquad (1)$$

Wie bereits erwähnt, dient der erste Tiefpassfilter 126 dazu, um jeweils eine Verstärkung (Gain) des MOSFET Transistors 118 und des Operationsverstärkers 120 in der Konstantstromquelle 117 oberhalb einer vorzugsweise einstellbaren Grenzfrequenz $f_B$ zu verringern. In Figur 2 ist der erste Tiefpassfilter 126 hierzu als Tiefpassfilter 2. Ordnung ausgeführt, wobei der Tiefpassfilter 2. Ordnung hier durch eine Reihenschaltung von zwei Tiefpassfiltern 1. Ordnung erhalten wird, wobei der Tiefpassfilter 1. Ordnung, wie im Beispiel gemäß Figur 2, eine Kombination eines Widerstands $R_f$ und eines Kondensators $C_f$ umfasst. Andere Ausführungen für das erste Tiefpassfilter 126 sind jedoch möglich; insbesondere ein Tiefpassfilter 1. Ordnung oder ein Tiefpassfilter höherer Ordnung, der durch Kombination von mindestens zwei Tiefpassfiltern niedrigerer Ordnung erhalten werden kann. Der hier exemplarisch dargestellte Tiefpassfilter 2. Ordnung kann insbesondere eine Dämpfung von Frequenzanteilen oberhalb der Grenzfrequenz $f_B$ um etwa 40 dB je Dekade bewirken.

Figur 3 zeigt ein Schaltbild eines bevorzugten Ausführungsbeispiels für die Mittelungsschaltung 122. Die hier exemplarisch dargestellte Mittelungsschaltung 122 ist dazu eingerichtet ist, um aus einzelnen Abtastspannungen $U_{S1}$ und $U_{S2}$, die jeweils mit dem von einer einzelnen Konstantstromquelle 117 erzeugten Konstantstrom über den zugehörigen Messwiderstand $R_{S1}$ bzw. $R_{S2}$ 119 in Beziehung stehen, eine gemittelte Spannung $U_{avg}$ zu erzeugen, welche als Ansteuerspannung $U_{Iset}$ für den Ansteuerstrom $I_{set}$, welcher einem Sollwert 123 für den Betriebsstrom für die Leuchtdioden 112 entspricht, dienen kann. Der in der Mittelungsschaltung 122 in der Ausführung gemäß Figur 3 eingesetzte Tiefpassfilter 128 kann wie hier lediglich einen Kondensator $C_a$ und für jede Konstantstromquelle 117 jeweils einen Mittelwertwiderstand $R_a$ umfassen, die derart jeweils einen Tiefpassfilter 1. Ordnung ausbilden. Die oben bereits erwähnte Grenzfrequenz $f_f$ der Mittelungsschaltung 122 steht hierbei mit einem Wert des Mittelwertwiderstands $R_a$ und einer Kapazität des Kondensators $C_a$ wie folgt in Beziehung:

$$C_a = n/2\pi f_f R_a, \qquad (2)$$

wobei n die Anzahl der durch die Vorrichtung 110 anzusteuernden Stränge 114 der Leuchtdioden 112 angibt. In einer alternativen Ausführung (nicht dargestellt) kann der Tiefpassfilter 128 auch einen Tiefpassfilter höherer Ordnung ausbilden.

Figur 4 zeigt schematisch ein Schaltbild eines bevorzugten Ausführungsbeispiels für die erfindungsgemäße Vorrichtung 110 zur Ansteuerung einer Vielzahl von Leuchtdioden 112, mit einem möglichst konstanten Betriebsstrom derselben Höhe, wobei hier exemplarisch jeweils drei Leuchtdioden 112 auf zwei in Parallelschaltung verbundene Stränge 114 verteilt sind, wobei die drei Leuchtdioden innerhalb jedes Strangs 114 in Reihenschaltung angeordnet sind. Wie oben bereits erwähnt, sind jedoch andere Ausführungen denkbar.

Die in Figur 4 exemplarisch dargestellte Schaltung umfasst die beiden Konstantstromquellen 116 mit Strommessschaltung gemäß der bevorzugten Ausführung aus Figur 2, die jeweils über den MOSFET Transistor 118, den Operationsverstärker 120 und den ersten Tiefpassfilter 126, das hier als Tiefpassfilter 2. Ordnung ausgeführt ist, verfügen, die Mittelungsschaltung 122 gemäß der bevorzugten Ausführung aus Figur 3, die den zweiten Tiefpassfilter 128 1. Ordnung aufweist, und die Vorspanneinheit 124 gemäß der bevorzugten Ausführung aus Figur 6, die dazu eingerichtet ist, um den Ansteuerstrom zur Festlegung der Arbeitspunkte der Operationsverstärker 120 in den beiden Konstantstromquellen 117 bereitzustellen, wobei die Vorspanneinheit 124 den durch die Mittelungsschaltung 122 ohnehin bereitgestellten Mittelwert aus den von jeder Konstantstromquelle 117 erzeugten Konstantströmen verwendet, um so auf eine externe Steuereinrichtung als höhere Instanz verzichten zu können. Es wird darauf hingewiesen, dass die exemplarisch in Figur 4 dargestellte Vorrichtung 110 in der Praxis über eine weitaus größere Anzahl an Strängen 114 und/oder Leuchtdioden je Strang 114 verfügen kann. Für weitere Einzelheiten in Bezug auf Aufbau und Funktionsweise der in Figur 4 exemplarisch dargestellten Vorrichtung 110 wird auf die Beschreibung zu den Figuren 2, 3, 5 und 6 verwiesen.

Figur 5 zeigt schematisch ein Schaltbild eines weiteren, nicht von der vorliegenden Erfindung umfassten Ausführungsbeispiels für die Vorspanneinheit 124. Da, wie oben beschrieben, die von der Mittelungsschaltung 122 bereitgestellte gemittelte Spannung $U_{avg}$ als Ansteuerspannung $U_{Iset}$ für den Ansteuerstrom $I_{set}$ dient, verfügen die in Figur 4 dargestellten Operationsverstärker 120 jeweils über zwei stabile Arbeitspunkte, und zwar bei 0 A und bei einem zwischen den Strängen 114 gleichmäßig verteilten Strom. Eine Aufgabe der Vorspanneinheit 124 besteht daher darin, einen geringfügig höheren Strom als der gemittelte Strom zu erzeugen. Diese Aufgabe wird in vorteilhafter Weise dadurch gelöst, dass die Vorspanneinheit 124 eine Offset-Spannung $U_{off}$ bereitstellt, die von einer in der Vorspanneinheit 124 vorhandenen zusätzlichen Konstantstromquelle 130 erzeugt werden kann. Ein von der zusätzlichen Konstantstromquelle 130 erzeugter Startstrom $I_0$ kann hierbei wie folgt ermittelt werden:

$$I_0 = n\, U_{off}\, /\, R_A, \qquad (3)$$

wobei n die Anzahl der durch die Vorrichtung 110 anzusteuernden Stränge 114 der Leuchtdioden 112 und dem Mittelwertwiderstand $R_A$ angibt.

Um den gewünschten Startstrom $I_0$ zu erzeugen, verfügt die Vorspanneinheit 124 über zwei gesonderte Transistoren 132, 134. Wie in Figur 5 schematisch dargestellt, können hierzu zwei PNP Transistoren eingesetzt werden; andere Ausgestaltungen sind jedoch auch möglich. In der Ausführung gemäß Figur 5 kann ein Stromsetzwiderstand $R_0$ 137 wie folgt dimensioniert werden:

$$R_0 = U_{BE}\, /I_0, \qquad (4)$$

wobei $I_0$ den Strom über den Stromsetzwiderstand $R_0$ 137 und die $U_{BE}$ die Basis-Emitter Spannung des Transistors 132, 134 bezeichnen. Folglich kann der in der Vorspanneinheit 124 vorhandene Vorwiderstand (Bias-Widerstand $R_b$) 136 dazu dienen, um einen Mindeststrom für die Vorspanneinheit 124 bereitzustellen, der zum Betrieb der Vorspanneinheit erforderlich ist.

Da sich die Spannung $U_{BE}$ mit der Temperatur verändern kann, kann die Ausführung der Vorspanneinheit 124 gemäß Figur 5 eine hohe Temperaturempfindlichkeit aufweisen.

Leuchtdioden 112 erzeugen Verlustwärme, welche Schaltungseigenschaften beeinflussen kann, insbesondere wenn die Leuchtdioden 112 in größerer Anzahl in Form eines Arrays angeordnet sind. Daher wäre es besonders wünschenswert, wenn die Vorspanneinheit 124 eine möglichst geringe Temperaturempfindlichkeit und damit eine möglichst hohe Temperaturstabilität aufweisen könnte. Insbesondere um diesen Vorteil zu erzielen, wird erfindungsgemäß das in Figur 6 dargestellte weitere Ausführungsbeispiel für die Vorspanneinheit 124 eingesetzt.

In der erfindungsgemäßen Ausführung gemäß Figur 6 verfügt die Vorspanneinheit 124 über eine Zenerdiode 138. Der erste Transistor 132 und die Zenerdiode 138 erzeugen hier die Offset-Spannung $U_{off}$, wobei der Vorwiderstand 136 als Bias-Widerstand $R_b$ dienen kann. Der zweite Transistor 134 ist dazu eingerichtet, um nur die an der Zenerdiode 138 anliegende Spannung zu spiegeln, wobei hierdurch die hieran anliegende Spannung in einen Strom $I_{src}$ umgesetzt werden kann. Da der zweite Transistor 134 eine vergleichsweise hohe Verstärkung aufweisen kann, kann der Strom $I_{src}$ nach folgender Beziehung ermittelt werden:

$$I_{scr} \approx I_0, \qquad (5)$$

wobei $I_0$ den Strom über den Stromsetzwiderstand $R_0$ 137 bezeichnet. In einer besonders bevorzugten Ausführung können die beiden Transistoren 132, 134 gemeinsam hergestellt werden, wodurch weitgehend sichergestellt werden kann, dass sie einen gemeinsamen Temperaturkoeffizienten aufweisen, wodurch sich in der erfindungsgemäßen Ausführung der Vorspanneinheit 124 gemäß Figur 6 eine eventuell auftretende Änderung der Temperatur kompensieren lassen kann. Hierzu kann die Zenerdiode 138 vorzugsweise temperaturunabhängig ausgeführt sein, insbesondere als 5.6 V Zenerdiode.

Die Figuren 7 und 8 zeigen bei Raumtemperatur RT ≈ 20 °C experimentell ermittelte Daten, welche mit einer Serien-Parallel-Konfiguration von 144 Leuchtdioden 114 des Typs Lumiled 2835C ermittelt wurden, die in Form eines Arrays von 24 Strängen 114, wobei jeder Strang 114 über 6 in Reihenschaltung angeordnete Leuchtdioden 112 verfügte, vorlagen. Der nominelle Betriebsstrom $I_{LED}$ für die Leuchtdioden 112 betrug jeweils 120 mA. Die 24 eingesetzten Konstantstromquellen 117 verfügten jeweils über ein NTTFS4930 MOSFET Transistor 118 und einen LM324 Operationsverstärker 120. Die Abtastwiderstände RS betrugen 1 Ω, der erste Tiefpassfilter 126 war ein Tiefpassfilter 2. Ordnung mit $R_f$ = 330 Ω und $C_f$ = 1 nF. Die Mittelungsschaltung 122 verfügte über einen Tiefpassfilter 128 1. Ordnung mit $R_a$ =

4700 Ω *und* $C_a$ *= 1uF.* Die Vorspanneinheit 124 war gemäß Figur 6 temperaturkompensiert ausgeführt und wies die beiden Transistoren 132, 134 Typ BC857S, die Zenerdiode 138 des Typs MM3Z5V6, den Vorwiderstand $R_b$ = 150 kΩ und den Stromsetzwiderstand 137 $R_0$ = 220 kΩ auf.

Figur 7 zeigt für die beschriebene Serien-Parallel-Konfiguration experimentell ermittelte Stromverteilungen in den Strängen 114. Hierbei ist in Figur 7 aufgetragen, in welcher Anzahl *m* der Stränge 114 der jeweils angegebene Betriebsstrom $I_{LED}$ in mA für die Leuchtdioden 112 erreicht wurde. Beispielsweise zeigten 3 Stränge 114 den Betriebsstrom $I_{LED}$ = 124 mA, 4 Stränge 114 den Betriebsstrom $I_{LED}$ = 125 mA usw.

Figur 8 zeigt ebenfalls für die beschriebene Serien-Parallel-Konfiguration experimentell ermittelte Daten für einen Verlauf des Vorspannstroms $I_{SRC}$ als Funktion der Temperatur T in °C. Hierbei ist in Figur 8 aufgetragen, wie sich der Vorspannstrom $I_{SRC}$ *(T),* bezogen auf den Betriebsstrom $I_{LED}$ *(RT)* bei Raumtemperatur RT ≈ 20 °C, mit zunehmender Temperatur T in °C ändert. Da die Vorspanneinheit 124 gemäß Figur 6 temperaturkompensiert ausgeführt wurde, ergab sich eine sehr geringe Temperaturdrift von etwa 2 % über eine Temperaturzunahme von 60 K. Dies entspricht gemittelt einem niedrigen Temperaturkoeffizienten von ca. 333 ppm/K.

Bezugszeichenliste

| | |
|---|---|
| 110 | Vorrichtung |
| 112 | Leuchtdiode |
| 114 | Strang |
| 116 | Konstantstromquelle mit Strommessschaltung |
| 117 | Konstantstromquelle |
| 118 | MOSFET Transistor |
| 119 | Strommesswiderstand |
| 120 | Operationsverstärker |
| 122 | Mittelungsschaltung |
| 123 | Sollwert für den Betriebsstrom |
| 124 | Vorspanneinheit |
| 126 | erstes Tiefpassfilter |
| 128 | zweites Tiefpassfilter |
| 130 | zusätzliche Konstantstromquelle |
| 132 | Transistor |
| 134 | Transistor |
| 136 | Vorwiderstand (Bias-Widerstand) |
| 137 | Stromsetzwiderstand |
| 138 | Zenerdiode |

**Patentansprüche**

1. Vorrichtung (110) zur Ansteuerung von Leuchtdioden (112), wobei die Leuchtdioden (112) auf mindestens zwei in Parallelschaltung verbundene Stränge (114) verteilt sind, wobei jeder der mindestens zwei Stränge (114) eine der Leuchtdioden (112) oder mindestens zwei in Reihenschaltung angeordnete Leuchtdioden (112) der Leuchtdioden aufweist, wobei an die mindestens zwei in Parallelschaltung verbundenen Stränge (114) ein Betriebsstrom angelegt ist, wobei sich der angelegte Betriebsstrom auf die mindestens zwei Stränge (114) aufteilt, wobei die Vorrichtung (110) umfasst:

   - mindestens zwei Konstantstromquellen (117), wobei jede der mindestens zwei Konstantstromquellen (117) dazu ausgelegt ist, einen Konstantstrom für jeweils einen der mindestens zwei in Parallelschaltung verbundenen Stränge (114) anhand eines Sollwerts (123) zu erzeugen, wobei jede der mindestens zwei Konstantstromquellen (117) einen ersten Tiefpassfilter (126) aufweist;
   - eine Mittelungsschaltung (122) zur Bildung eines Mittelwertes aus den jeweiligen bereitgestellten Konstantströmen, wobei der von der Mittelungsschaltung (122) gebildete Mittelwert der Sollwert (123) ist, wobei die Mittelungsschaltung (122) mindestens einen zweiten Tiefpassfilter (128) aufweist; und
   - eine Vorspanneinheit (124), die dazu ausgelegt ist, in jeder der mindestens zwei Konstantstromquellen (117) unter Verwendung des von der Mittelungsschaltung (122) gebildeten Mittelwerts einen jeweiligen Arbeitspunkt festzulegen,

   **dadurch gekennzeichnet,**
   **dass** die Vorspanneinheit (124) mindestens zwei Transistoren (132, 134) und eine Zenerdiode (138) aufweist und derart eingerichtet ist, dass ein erster Transistor (132) der mindestens zwei Transistoren und die Zenerdiode (138) eine Offset-Spannung erzeugen, wobei ein zweiter Transistor (134) der mindestens zwei Transistoren die an der Zenerdiode (138) anliegende Spannung spiegelt, wodurch die an der Zenerdiode (138) anliegende Spannung in einen Ansteuerstrom zur Festlegung der jeweiligen Arbeitspunkte umgesetzt wird.

2. Vorrichtung (110) nach dem vorangehenden Anspruch, wobei jede der Konstantstromquellen (117) mindestens einen Transistor (118) und mindestens einen Operationsverstärker (120) aufweist.

3. Vorrichtung (110) nach einem der vorangehenden Ansprüche, wobei der erste Tiefpassfilter (126) eine erste Grenzfrequenz und der zweite Tiefpassfilter (128) eine zweite Grenzfrequenz aufweist, wobei die zweite Grenzfrequenz einen Wert unterhalb der ersten Grenzfrequenz annimmt.

4. Vorrichtung (110) nach einem der vorangehenden Ansprüche, wobei der erste Tiefpassfilter (126) ein Tiefpassfilter i-ter Ordnung und der zweite Tiefpassfilter (128) ein Tiefpassfilter *j*-ter Ordnung ist, wobei *i, j* ganzzahlige Werte > 0 angeben.

5. Vorrichtung (110) nach einem der vorangehenden Ansprüche, wobei die mindestens zwei Transistoren (132, 134), die Zenerdiode (138) und mindestens ein Vorwiderstand (136) der Vorspanneinheit (124) als zusätzliche Konstantstromquelle (130) bei der Festlegung des jeweiligen Arbeitspunkts eingesetzt werden.

6. Vorrichtung (110) nach einem der vorangehenden Ansprüche, wobei die mindestens zwei Transistoren (132, 134) aus einem gemeinsam Herstellungsprozess stammen.

7. Vorrichtung (110) nach einem der vorangehenden Ansprüche, wobei die eine Zenerdiode (138) temperaturunabhängig ausgeführt ist.

8. Verfahren zur Ansteuerung von Leuchtdioden (112) gemäß der Vorrichtung (110) nach einem der Ansprüche 1 bis 7, wobei jede der mindestens zwei parallel zueinander angeordnete Stränge (114) von einem angelegten Betriebsstrom angesteuert wird, wobei der angelegte Betriebsstrom auf die mindestens zwei Stränge (114) aufteilt wird, wobei von jeder der mindestens zwei Konstantstromquellen (117) der Vorrichtung (110) der jeweilige Konstantstrom für jeweils eine der mindestens zwei in Parallelschaltung verbundenen Stränge anhand des Sollwerts (123) erzeugt wird, wobei von der Mittelungsschaltung (122) der Vorrichtung (110) ein Mittelwert aus den von jeder der mindestens zwei Konstantstromquellen (117) bereitgestellten Konstantströmen gebildet wird, wobei der von der Mittelungsschaltung (122) gebildete Mittelwert als der Sollwert (123) eingesetzt wird, wobei mittels des ersten Tiefpassfilters (126) in jeder der mindestens zwei Konstantstromquellen (117) und mittels des zweiten Tiefpassfilters (128) in der Mittelungsschaltung (122) der angelegte Betriebsstrom gedämpft wird, wobei des mittels von der Vorspanneinheit (124) der Vorrichtung (110) unter Verwendung des von der Mittelungsschaltung (122) gebildeten Mittelwerts ein Ansteuerstrom bereitgestellt wird, mittels dem ein jeweiliger Arbeitspunkt in jeder der mindestens zwei Konstantstromquellen (117) festlegt wird,
**dadurch gekennzeichnet,**

**dass** die Vorspanneinheit (124) die mindestens zwei Transistoren (132, 134) und die eine Zenerdiode (138) aufweist, wobei mittels des ersten Transistors (132) der mindestens zwei Transistoren und der Zenerdiode (138) eine Offset-Spannung erzeugt wird, wobei mittels des zweiten Transistors (134) der mindestens zwei Transistoren die an der Zenerdiode (138) anliegende Spannung gespiegelt wird, wodurch die an der Zenerdiode (138) anliegende Spannung in den Ansteuerstrom zur Festlegung der jeweiligen Arbeitspunkte umgesetzt wird.

9. Verfahren nach dem vorangehenden Anspruch, wobei jede Konstantstromquelle (117) mindestens einen Transistor (118) und mindestens einen Operationsverstärker (120) aufweist, wobei der von der Vorspanneinheit (124) bereitgestellte Ansteuerstrom den Arbeitspunkt des Operationsverstärkers (120) in jeder der mindestens zwei Konstantstromquellen (117) festlegt.

10. Verfahren nach einem der beiden vorangehenden Ansprüche, wobei die mindestens zwei Transistoren (132, 134), die Zenerdiode (138) und der mindestens eine Vorwiderstand (136) der Vorspanneinheit (124) als zusätzliche Konstantstromquelle (130) bei der Festlegung des jeweiligen Arbeitspunkts eingesetzt werden.

11. Verfahren nach dem vorangehenden Anspruch, wobei die mindestens zwei Transistoren (132, 134) aus einem gemeinsam Herstellungsprozess stammen.

12. Verfahren nach einem der beiden vorangehenden Ansprüche, wobei eine temperaturunabhängig ausgeführte Zenerdiode (138) verwendet wird.

**Claims**

1. Device (110) for driving light-emitting diodes (112), wherein the light-emitting diodes (112) are distributed over at least two parallel-connected strands (114), wherein each of the at least two strands (114) comprises one of the light-emitting diodes (112) or at least two light-emitting diodes (112), arranged in series of the light-emitting diodes, wherein an operating current is applied to the at least two parallel-connected strands (114), wherein the applied operating current is divided over the at least two strands (114), wherein the device (110) comprises:

   - at least two constant current sources (117), wherein each of the at least two constant current sources (117) is designed to generate a constant current for each one of the at least two parallel-connected strands (114) based on a setpoint value (123), wherein each of the at least two constant current sources (117) has a first low-pass filter (126) ;
   - an averaging circuit (122) for forming an average from each of the provided constant currents, wherein the average formed by the averaging circuit (122) is the setpoint value (123), wherein the averaging circuit (122) has at least one second low-pass filter (128); and
- a biasing unit (124) that is designed to define a respective operating point in each of the at least two constant current sources (117) using the average formed by the averaging circuit (122),

**characterized in that**
the biasing unit (124) has at least two transistors (132, 134) and a Zener diode (138) and is designed in a manner that a first transistor (132) of the at least two transistors and the Zener diode (138) generate an offset voltage, wherein a second transistor (134) of the at least two transistors mirrors the voltage present at the Zener diode (138), whereby the voltage present at the Zener diode (138) is converted into a drive current for defining the respective operating points.

2. Device (110) according to the preceding claim, wherein each of the constant current sources (117) has at least one transistor (118) and at least one operational amplifier (120).

3. Device (110) according to either of the preceding claims, wherein the first low-pass filter (126) has a first cut-off frequency and the second low-pass filter (128) has a second cut-off frequency, wherein the second cut-off frequency adopts a value below the first cut-off frequency.

4. Device (110) according to one of the preceding claims, wherein the first low-pass filter (126) is a ith-order low-pass filter and the second low-pass filter (128) is a jth-order low-pass filter, wherein $i$ and $j$ indicate integer values > 0.

5. Device (110) according to one of the preceding claims, wherein the at least two transistors (132, 134), the Zener diode (138) and at least one series resistor (136) of the biasing unit (124) are used as additional constant current source (130) when defining the respective operating point.

6. Device (110) according to one of the preceding claims, wherein the at least two transistors (132, 134) originate from a common manufacturing process.

7. Device (110) according to one of the preceding claims, wherein the one Zener diode (138) has a temperature-independent design.

8. Method for driving light-emitting diodes (112) using the device (110) according to one of Claims 1 to 7, wherein each of the at least two strands (114) arranged in parallel with one another is driven by an applied operating current, wherein the applied operating current is divided over the at least two strands (114), wherein each of the at least two constant current sources (117) of the device (110) generates the respective constant current for in each case one of the at least two parallel-connected strands based on the setpoint value (123), wherein the averaging circuit (122) of the device (110) forms an average from the constant currents provided by each of the at least two constant current sources (117), wherein the average formed by the averaging circuit (122) is used as the setpoint value (123), wherein the applied operating current is attenuated by way of the first low-pass filter (126) in each of the at least two constant current sources (117) and by way of the second low-pass filter (128) in the averaging circuit (122), wherein a drive current is provided by way of the biasing unit (124) of the device (110) using the average formed by the averaging circuit (122), by way of which drive current a respective operating point is defined in each of the at least two constant current sources (117),

**characterized in that**
the biasing unit (124) comprises the at least two transistors (132, 134) and the one Zener diode (138), wherein an offset voltage is generated by using the first transistor (132) of the at least two transistors and the Zener diode (138), wherein the voltage present at the Zener diode (138) is mirrored by using the second transistor (134) of the at least two transistors, whereby the voltage present at the Zener diode (138) is converted into the drive current for defining the respective operating points.

9. Method according to the preceding claim, wherein each constant current source (117) has at least one transistor (118) and at least one operational amplifier (120), wherein the drive current provided by the biasing unit (124) defines the operating point of the operational amplifier (120) in each of the at least two constant current sources (117).

10. Method according to either of the two preceding claims, wherein the at least two transistors (132, 134), the Zener diode (138) and the at least one series resistor (136) of the biasing unit (124) are used as additional constant current source (130) when defining the respective operating point.

11. Method according to the preceding claim, wherein the at least two transistors (132, 134) originate from a common manufacturing process.

12. Method according to either of the two preceding claims, wherein a Zener diode (138) having a temperature-independent design is used.

**Revendications**

1. Dispositif (110) de commande de diodes électroluminescentes (112), les diodes électroluminescentes (112) étant réparties sur au moins deux branches (114) reliées en parallèle, chacune des au moins deux branches (114) comportant l'une des diodes électroluminescentes (112) ou au moins deux diodes électroluminescentes (112), disposées en série, des diodes électroluminescentes, un courant de fonctionnement étant appliqué aux au moins deux branches (114) reliées en parallèle, le courant de fonctionnement appliqué étant divisé entre les au moins deux branches (114), le dispositif (110) comprenant :

   - au moins deux sources de courant constant (117), chacune des au moins deux sources de courant constant (117) étant conçue pour générer à l'aide d'une valeur cible (123) un courant constant destiné à l'une des au moins deux branches (114) reliées en parallèle, chacune des au moins deux sources de courant constant (117) comportant un premier filtre passe-bas (126) ;
   - un circuit de formation de moyenne (122) destiné à former une valeur moyenne à partir des courants constants respectifs fournis, la valeur moyenne formée par le circuit de formation de moyenne (122) étant la valeur cible (123), le circuit de formation moyenne (122) comportant au moins un deuxième filtre passe-bas (128) ; et
   - une unité de précharge (124) qui est conçue pour définir un point de fonctionnement respectif dans chacune des au moins deux sources de courant constant (117) à l'aide de la valeur moyenne formée par le circuit de formation de moyenne (122),

   **caractérisé en ce que**
   l'unité de précharge (124) comporte au moins deux transistors (132, 134) et une diode Zener (138) et est conçue de manière à ce qu'un premier transistor (132) des au moins deux transistors et la diode Zener (138) génèrent une tension d'offset, un deuxième transistor (134) des au moins deux transistors reflétant la tension présente au niveau de la diode Zener (138), ce qui convertit la tension présente au niveau de la diode Zener (138) en un courant de commande destiné à définir le points de fonctionnement.

2. Dispositif (110) selon la revendication précédente, chacune des sources de courant constant (117) comportant au moins un transistor (118) et au moins un amplificateur opérationnel (120).

3. Dispositif (110) selon l'une des revendications précédentes, le premier filtre passe-bas (126) présentant une première fréquence de coupure et le deuxième filtre passe-bas (128) présentant une deuxième fréquence de coupure, la deuxième fréquence de coupure prenant une valeur inférieure à la première fréquence de coupure.

4. Dispositif (110) selon l'une des revendications précédentes, le premier filtre passe-bas (126) étant un filtre passe-bas d'ordre *i* et le deuxième filtre passe-bas (128) étant un filtre passe-bas d'ordre *j*, *i*, *j* indiquant des valeurs entières > 0.

5. Dispositif (110) selon l'une des revendications précédentes, les au moins deux transistors (132, 134), la diode Zener (138) et au moins une résistance série (136) de l'unité de précharge (124) étant utilisés comme source de courant constant supplémentaire (130) lors de la détermination du point de fonctionnement respectif.

6. Dispositif (110) selon l'une des revendications précédentes, les au moins deux transistors (132, 134) provenant d'un processus de fabrication commun.

7. Dispositif (110) selon l'une des revendications précédentes, la diode Zener (138) étant indépendante de la température.

8. Procédé de commande de diodes électroluminescentes (112) conformément au dispositif (110) selon l'une des revendications 1 à 7, chacune des au moins deux branches (114) disposées parallèlement l'une à l'autre étant commandée par un courant de fonctionnement appliqué, le courant de fonctionnement appliqué étant divisé entre les au moins deux branches (114), chacune des au moins deux sources de courant constant (117) du dispositif (110) générant à l'aide de la valeur cible (123) le courant constant respectif destiné à l'une des au moins deux branches reliées en parallèle, le circuit de formation de moyenne (122) du dispositif (110) formant une valeur moyenne à partir des courants constants fournis par chacune des au moins deux sources de courant constant (117), la valeur moyenne formée par le circuit de formation de moyenne (122) étant utilisée comme valeur cible (123), le courant de fonctionnement appliqué étant amorti au moyen du premier filtre passe-bas (126) dans chacune des au moins deux sources de courant constant (117) et au moyen du deuxième filtre passe-bas (128) dans le circuit de formation moyenne (122), un courant de commande, qui permet de définir un point de fonctionnement respectif dans chacune des au moins deux sources de courant constant (117), étant fourni au moyen de l'unité de précharge (124) du dispositif (110) à l'aide de la valeur moyenne formée par le circuit de formation de moyenne (122),
   **caractérisé en ce que**

l'unité de précharge (124) comporte les au moins deux transistors (132, 134) et la diode Zener (138), une tension offset étant générée au moyen du premier transistor (132) des au moins deux transistors et de la diode Zener (138), la tension présente sur la diode Zener (138) étant reflétée au moyen du deuxième transistor (134) des au moins deux transistors, ce qui convertit la tension présente sur la diode Zener (138) en courant d'attaque destiné à définir les points de fonctionnement respectifs.

9. Procédé selon la revendication précédente, chaque source de courant constant (117) comportant au moins un transistor (118) et au moins un amplificateur opérationnel (120), le courant de commande fourni par l'unité de précharge (124) définissant le point de fonctionnement de l'amplificateur opérationnel (120) dans chacune des au moins deux sources de courant constant (117).

10. Procédé selon l'une des deux revendications précédentes, les au moins deux transistors (132, 134), la diode Zener (138) et l'au moins une résistance série (136) de l'unité de précharge (124) étant utilisés comme source de courant constant supplémentaire (130) lors de la détermination du point de fonctionnement.

11. Procédé selon la revendication précédente, les au moins deux transistors (132, 134) provenant d'un processus de fabrication commun.

12. Procédé selon l'une des deux revendications précédentes, une diode Zener (138) indépendante de la température étant utilisée.

Fig. 1

Fig. 2

Fig. 3

Fig. 4

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015104973 B3
- US 20090187925 A1
- US 20150061390 A1
- WO 2010003448 A1
- US 2003025120 A1
- DE 102004034359 B3

- US 20110080115 A1
- US 20140211192 A1
- DE 102010045389 B4
- CN 101702849 A
- DE 102015205808 A1
- DE 10201906 A1

**In der Beschreibung aufgeführte Nicht-Patentliteratur**

- **S. WINDER.** *Power Supplies for LED Driving,* ISBN 978-0-7506-8341-8, 22